(19) Europäisches Patentamt
European Patent Office
Office européen des brevets

(11) **EP 4 529 288 A1**

(12) **EUROPEAN PATENT APPLICATION**
published in accordance with Art. 153(4) EPC

(43) Date of publication:
26.03.2025 Bulletin 2025/13

(51) International Patent Classification (IPC):
H04W 52/02 (2009.01)    H04W 76/28 (2018.01)
H04W 68/02 (2009.01)

(21) Application number: 23824147.5

(22) Date of filing: 08.06.2023

(52) Cooperative Patent Classification (CPC):
H04W 52/02; H04W 68/02; H04W 76/28;
Y02D 30/70

(86) International application number:
PCT/KR2023/007831

(87) International publication number:
WO 2023/243929 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.06.2022 KR 20220071967

(71) Applicant: Samsung Electronics Co., Ltd.
Suwon-si, Gyeonggi-do 16677 (KR)

(72) Inventors:
• BAEK, Sangkyu
Suwon-si Gyeonggi-do 16677 (KR)
• AGIWAL, Anil
Suwon-si Gyeonggi-do 16677 (KR)
• JANG, Jaehyuk
Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND DEVICE FOR NES MODE OPERATION OF IDLE MODE AND INACTIVE MODE TERMINAL IN WIRELESS COMMUNICATION SYSTEM**

(57) The present disclosure relates to a 5G or 6G mobile communication system for supporting higher data transmission rates. A method performed by means of a base station in a wireless communication system, of the present disclosure, comprises the steps of: transmitting either a first type master information block (MIB) including a first access barring bit that indicates whether to permit cell connection of all types of terminals, or a second type MIB including a second access barring bit that indicates whether to permit cell connection of a terminal supporting an energy-saving mode of the base station; and performing a cell connection procedure with at least one terminal having received either the first type MIB or the second type MIB, wherein the first access barring bit in the second MIB cannot be used in the terminal supporting an energy-saving mode of the base station.

FIG.5

**Description**

[Technical Field]

The disclosure relates to an operation of a terminal and a base station in a wireless communication system and, specifically, to a method and a device for a NES mode operation of a terminal in an idle mode or inactive mode.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to reduce power consumption of networks.

[Disclosure of Invention]

[Technical Problem]

A disclosed embodiment is to provide a device and a method enabling effective provision of a service in a wireless communication system.

[Solution to Problem]

According to an embodiment of the disclosure, a method performed by a base station in a wireless communication system may include transmitting one of a first type master information block (MIB) including a first access barring bit indicating whether all types of user equipments are allowed to access a cell, and a second type MIB including the first access barring bit and a second access barring bit indicating whether a user equipment supporting an energy saving mode of a base station is allowed to access a cell, and performing a cell access procedure with at least one user equipment having received one of the first type MIB and the second type MIB, wherein the first access barring bit in the second MIB is not used in a user equipment supporting the energy saving mode of the base station.

[Advantageous Effects of Invention]

Various embodiments of the disclosure provide a device and a method enabling effective provision of a service in a wireless communication system.

Advantageous effects obtainable from the disclosure may not be limited to the above-mentioned effects, and other effects which are not mentioned may be clearly understood, through the following descriptions, by those skilled in the art to which the disclosure pertains.

[Brief Description of Drawings]

FIG. 1 is a diagram illustrating a method of reducing network power consumption in a mobile communication system according to an embodiment of the disclosure;
FIG. 2 is a diagram illustrating an operation method of a NES mode according to an embodiment of the disclosure;
FIG. 3 is a diagram illustrating an operation method of a NES mode according to an embodiment of the disclosure;
FIG. 4 is a diagram illustrating an operation method of a NES mode according to an embodiment of the disclosure;
FIG. 5 illustrates an operation method of a NES mode according to an embodiment of the disclosure;
FIG. 6 illustrates a method of configuring a NES mode parameter group according to an embodiment of the disclosure;
FIG. 7 illustrates a method of configuring an I-DRX PF/PO according to an embodiment of the disclosure;
FIG. 8 illustrates a cell access method according to an embodiment of the disclosure;
FIG. 9 illustrates a method of configuring a cell reselection priority according to an embodiment of the disclosure;
FIG. 10 illustrates a cell reselection method according to an embodiment of the disclosure;
FIG. 11 illustrates a cell reselection method according to an embodiment of the disclosure;
FIG. 12 illustrates a method of configuring a NES synchronization signal block (SSB) according to an embodiment of the disclosure;
FIG. 13 illustrates a method of configuring a NES mode between base stations according to an embodiment of the disclosure;
FIG. 14 illustrates a structure of a base station according to an embodiment of the disclosure.
FIG. 15 illustrates a structure of a UE according to an embodiment of the disclosure.

[Mode for Carrying out the Invention]

In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. Hereinafter, embodiments of the disclosure will be described with reference to the accompanying drawings.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also requires a packet error rate of 10$^{-5}$ or less. Therefore, for the services supporting URLLC, a 5G system must provide a transmit time interval (TTI) shorter than those of other services, and may also require a design for assigning a large number of resources in a frequency band in order to secure reliability of a communication link.

The above described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

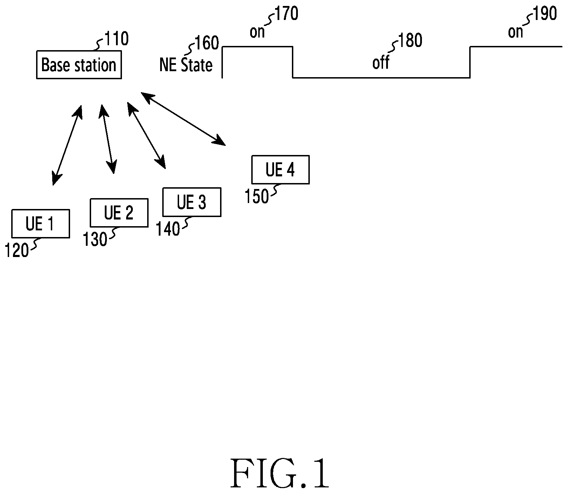

FIG. 1 is a diagram illustrating a method of reducing network power consumption in a wireless communication system according to an embodiment of the disclosure.

Referring to FIG. 1, a base station 110 in a wireless communication system provides a communication service to multiple UEs 120, 130, 140, and 150. Each UE 120, 130, 140, or 150 may be in a connected mode (RRC_CONNECTED mode) in which a radio resource control (RRC) connection is established, an inactive mode (RRC_INACTIVE mode) in which an RRC connection is released, or an idle mode (RRC_IDLE mode). UEs being in various RRC modes may be positioned in the coverage of the one base station 110, and the base station 110 needs to provide a communication service to the multiple UEs 120, 130, 140, and 150. Therefore, the base station 110 may have an amount of power consumption relatively higher than those of the UEs. Furthermore, in 5th generation (5G) mobile communication requiring high speed transmission, a higher bandwidth, a higher transmission signal strength, and a higher reception sensitivity for high speed transmission are required and result in a higher amount of power consumption. The number of base stations 110 managed by a single mobile communication service provider may range from tens of thousands to hundreds of thousands, and thus the high amount of power consumption of a communication network including the base stations (110) may increase the management and maintenance costs of a mobile communication network. Therefore, a method for lowering the amount of power consumption of the communication network will be needed.

The reduction of the amount of power consumption of the communication network may be accomplished by temporarily cutting of the power of a transceiver of the base station 110. An operation of temporarily cutting of the power of the transceiver of the base station 110 may be possible only when the base station 110 does not communicate with a user equipment to which the base station needs to provide a communication service. Referring to FIG. 1, a state indicating whether the base station 110 has cut off the power of the transceiver may be expressed by a network energy (NE) state 160. When the NE state 160 of the base station 110 is a NE ON state 170, the base station 110 may perform a procedure required for transmission and reception with a UE while keeping the power of the transceiver on. For example, the base station 110 may indicate resource allocation information in a physical downlink control channel (PDCCH) to allocate a downlink resource to a UE, and perform data transmission in a physical downlink shared channel (PDSCH). However, if the base station 110 has no or little data to transmit and receive to and from the UE, the base station 110 may switch the NE state 160 to an NE OFF state 180 and cut off the power of the transceiver. If the UE knows the NE OFF state 180 of the base station 110, the UE may also cut off the power of a transceiver of the UE to reduce power consumption and not perform an unnecessary communication procedure. The transition of the NE state 160 of the base station 110 may occur for a previously defined time, or may be changed by separate control information. According to an embodiment, the base station 110 in FIG. 1 may switch the NE state 160 to a NE ON state 190 again after a configured time for the NE OFF state 180.

Referring to FIG. 1, the base station 110 may also cut off the power of all receivers in the NE OFF state 180, but in an embodiment, may deactivate some transmission and reception functions of the base station 110 to obtain the effect of reduction of some power consumption. According to an embodiment, the base station 110 may not transmit, in the NE OFF state 180, a paging message through which the base station 110 periodically indicates a UE in an idle mode (RRC idle mode) or an inactive mode (RRC inactive mode) to transition to a connected mode (RRC connected mode). If the UE knows that the base station 110 is not to transmit a paging message in the NE OFF state 180, the UE may not monitor a paging message in a paging occasion (PO) of a paging frame (PF) which is previously configured. The UE may not perform an operation corresponding to a function deactivated by the base station 110, thereby reducing unnecessary power consumption of the UE as well as the base station 110 and preventing malfunctioning of the UE. An operation mode of the base station 110 and a UE for the NE OFF state 180 of the base station 110 may be referred to as a network energy saving (NES) mode. According to an embodiment, the NE OFF state 180 of the base station 110 alone may be called a NES mode. According to another embodiment, a detailed definition of the NES mode may vary, but performing a separate operation by the base station 110 and a UE to reduce the power consumption of the base station 110 may be comprehensively called a NES mode.

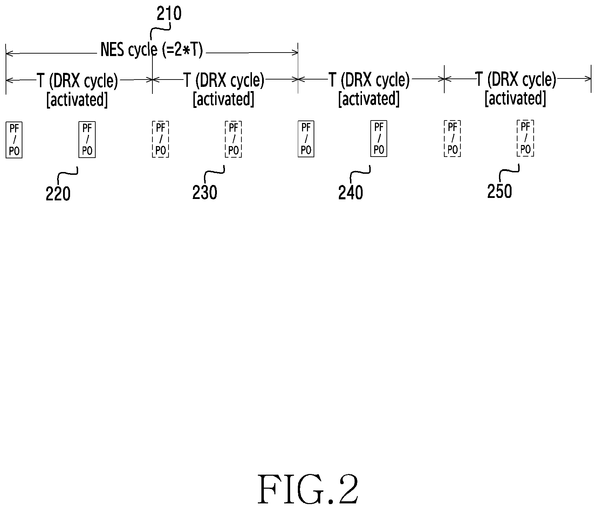

FIG. 2 is a diagram illustrating an operation method of a NES mode according to an embodiment of the disclosure.

Referring to FIG. 2, in a case of a UE in an idle mode or an inactive mode, the UE may monitor a paging message periodically transmitted by a base station every discontinuous reception (DRX) cycle (T) 220, 230, 240, and 250. Each UE may identify whether there is a paging message, by using a paging-radio network temporary identifier (P-RNTI) in a paging occasion (PO) of a paging frame (PF) configured in a DRX cycle. However, transmitting a paging message by the base station every DRX cycle causes an increase in the power consumption of the base station, and thus the base station may reduce power consumption by cutting off the transceiver power of the base station in some DRX cycles without transmitting a paging message. In particular, if it is expected that the amount of paging messages that the base station needs to transmit to the UE is not large, there is no need to use the PF/POs of all DRX cycles for the transmission of paging messages. In the embodiment of FIG. 2, a NES mode is defined, and a method of configuring a NES cycle 210 that is an integer multiple of a DRX cycle in the NES mode is provided. Referring to FIG. 2, an NES mode is a method for reducing the power consumption of a base station operating on idle/inactive DRX (I-DRX, a DRX for periodically listening to a paging message), and thus may be called NES I-DRX. In the embodiment of FIG. 2, it is assumed that the NES cycle 210 is two times of the DRX cycle, but the NES cycle 210 may have a length of a different integer multiple, such as three times or four times of the DRX cycle. In the NES mode, the base station may use a PF/PO, for paging message transmission, only in the configured partial DRX cycle 220 or 240 in the NES cycle 210, and may not use a PF/PO, for paging message transmission, in the DRX cycle 230 or 250 in the remaining NES cycle 210. In other words, a PF/PO that is a paging resource may be periodically repeated to be activated and deactivated according to the NES cycle 210 as a period. According to an embodiment, if the NES cycle 210 is two times of the DRX cycle, transmission of paging using a PF/PO is possible in a first DRX cycle 220 of the NES cycle 210, but transmission of paging using a PF/PO may not be performed in a second DRX cycle 230 of the NES cycle. The base station may cut off the power of the transceiver in the second DRX cycle 230 of the NES cycle 210 so as to reduce power consumption. If paging occurs in a DRX cycle that is not used (the second DRX cycle 230 in the embodiment of FIG. 2), the base station may transmit paging in a subsequent DRX cycle in which transmission of paging is performed using a PF/PO. The UE may not need to perform an operation of receiving a paging message in a DRX cycle in which a PF/PO is not used for paging transmission, when the UE knows that the base station operates in the NES mode and knows the length of a NES cycle as indicated by the base station. In the embodiment of FIG. 2, a DRX cycle in which transmission of paging using a PF/PO is possible is called an activated DRX cycle, and a DRX cycle in which transmission of paging using a PF/PO is not performed may be called a deactivated DRX cycle. According to an embodiment, in a deactivated DRX cycle, the base station may not transmit a paging early indication (PEI) (or also referred to as early paging indication) message to the UE, and the UE may also not attempt to receive a PEI message. However, a synchronization signal block (SSB) may be transmitted from the base station to the UE for synchronization between the base station and the UE regardless of whether a DRX cycle is activated/deactivated.

The base station may use one of system information block (SIB) messages to notify the UE that the base station operates in the NES mode. The base station may transmit, to the UE, a system information block message including at least one of a NES cycle used by the base station, a DRX cycle (activated DRX cycle) in which a paging message using a PF/PO is transmitted, and information on a DRX cycle (deactivated DRX cycle) in which a paging message using a PF/PO is not transmitted.

According to an embodiment, in a deactivated DRX cycle, use of a physical random access channel (PRACH) for random access may also be deactivated. In this case, random access performed by the UE is not performed in the deactivated DRX cycle, and the UE may perform random access using a PRACH in a subsequently activated DRX cycle. Accordingly, the base station is not required to detect a random access preamble transmitted from the UE in a PRACH in the deactivated DRX cycle, and thus may reduce power consumption. In the embodiment of FIG. 2, an activated DRX cycle operation may be defined as an NE state being ON. Similarly, a deactivated DRX cycle operation may be defined as an NE state being OFF.

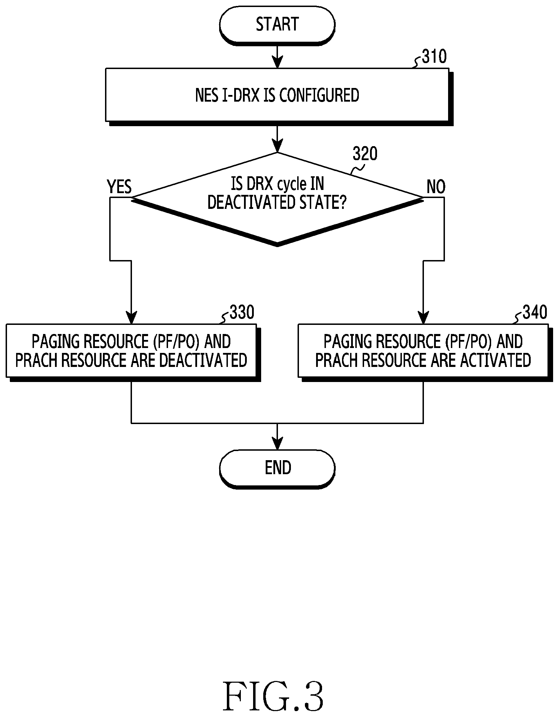

FIG. 3 is a diagram illustrating an operation method of a NES mode according to an embodiment of the disclosure.

A base station may periodically repeat activation and deactivation of a PF/PO, which is a paging resource, according to a NES cycle as a period so as to reduce power consumption. A DRX cycle in which a PF/PO is deactivated (a DRX cycle in which transmission of paging using a PF/PO is not performed) may be called a deactivated DRX cycle, and a DRX cycle in which a PF/PO is activated (a DRX cycle in which transmission of paging using a PF/PO is possible) may be called an activated DRX cycle. Such a NES mode is a method for reducing the power consumption of a base station operating on idle/inactive DRX (I-DRX, a DRX for periodically listening to a paging message), and thus may be called NES I-DRX.

Referring to FIG. 3, in operation 310, it is assumed that a base station configures NES I-DRX to configure UEs existing in the coverage of the base station (cell) to operate in a NES I-DRX mode. In NES I-DRX, an integer multiple of a DRX cycle may be configured as a NES cycle, and it is assumed that some DRX cycles among the DRX cycles in the NES cycle are activated.

In operation 320, a UE may determine, according to an activation state of a DRX cycle, whether to perform paging monitoring for determining whether there is a paging message in each DRX cycle. If the DRX cycle is a DRX cycle in a deactivated state, operation 330 may proceed. If the DRX cycle is not a DRX cycle in a deactivated state, that is, if the DRX cycle is a DRX cycle in an activated state, operation 340 may proceed.

In operation 330, in the DRX cycle in the deactivated state, a paging resource (PF/PO) and a PRACH resource may be deactivated. In the DRX cycle in the deactivated state, a paging message may not be monitored in a PO configured for the UE, and the power consumption of the UE may be reduced for the time for which reception is not performed. On the deactivated PRACH resource, the UE does not transmit a random access preamble to the base station, and thus the UE does not need to turn on the power of a transceiver to transmit the PRACH resource. Therefore, power consumption may be reduced. A triggered random access may be performed using a PRACH resource of a subsequently activated DRX cycle.

In operation 340, in the DRX cycle in the activated state, a paging resource (PF/PO) and a PRACH resource may be activated. In the DRX cycle in the activated state, a paging message is monitored in a PO configured for the UE, and if a random access is triggered, the random access may be performed using the PRACH resource. However, a synchronization signal block (SSB) may be transmitted from the base station to the UE for synchronization between the base station and the UE regardless of whether a DRX cycle is activated/deactivated.

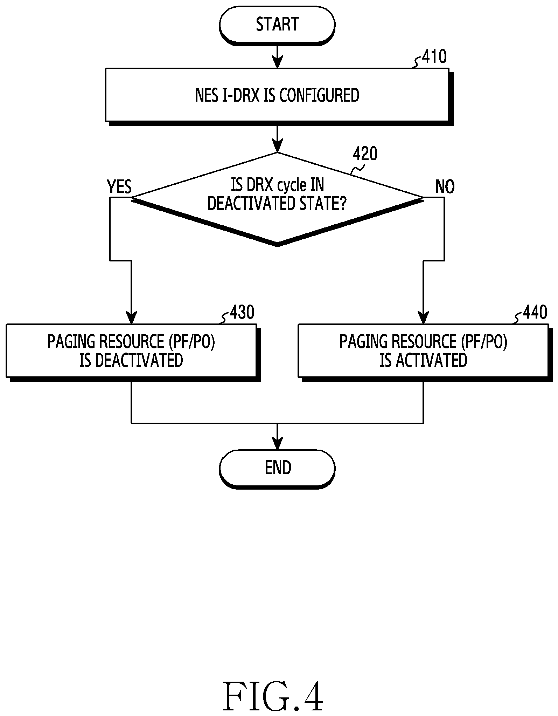

FIG. 4 is a diagram illustrating an operation method of a NES mode according to an embodiment of the disclosure.

A base station may periodically repeat activation and deactivation of a PF/PO, which is a paging resource, according to a NES cycle as a period so as to reduce power consumption. A DRX cycle in which a PF/PO is deactivated (a DRX cycle in which transmission of paging using a PF/PO is not performed) may be called a deactivated DRX cycle, and a DRX cycle in which a PF/PO is activated (a DRX cycle in which transmission of paging using a PF/PO is possible) may be called an activated DRX cycle. Such a NES mode is a method for reducing the power consumption of a base station operating on idle/inactive DRX (I-DRX, a DRX for periodically listening to a paging message), and thus may be called NES I-DRX.

Referring to FIG. 4, in operation 410, it is assumed that a base station configures NES I-DRX to configure UEs existing in the coverage of the base station (cell) to operate in a NES I-DRX mode. In NES I-DRX, an integer multiple of a DRX cycle may be configured as a NES cycle, and it is assumed that some DRX cycles among the DRX cycles in the NES cycle are activated.

In operation 420, a UE may determine, according to an activation state of a DRX cycle, whether to perform paging monitoring for determining whether there is a paging message in each DRX cycle. If the DRX cycle is a DRX cycle in a deactivated state, operation 430 may proceed. If the DRX cycle is not a DRX cycle in a deactivated state, that is, if the DRX cycle is a DRX cycle in an activated state, operation 440 may proceed.

In operation 430, in the DRX cycle in the deactivated state, a paging resource (PF/PO) may be deactivated. In the DRX cycle, a paging message may not be monitored in a PO configured for the UE, and the power consumption of the UE may be reduced for the time for which reception is not performed.

In operation 440, in the DRX cycle in the activated state, a paging resource (PF/PO) may be activated. In the DRX cycle, a paging message may be monitored in a PO configured for the UE. However, a synchronization signal block (SSB) may be transmitted from the base station to the UE for synchronization between the base station and the UE regardless of whether a DRX cycle is activated/deactivated. In addition, the UE may transmit a random access preamble to the base station by always using a PRACH resource for the UE to perform random access, regardless of whether a DRX cycle is activated/deactivated.

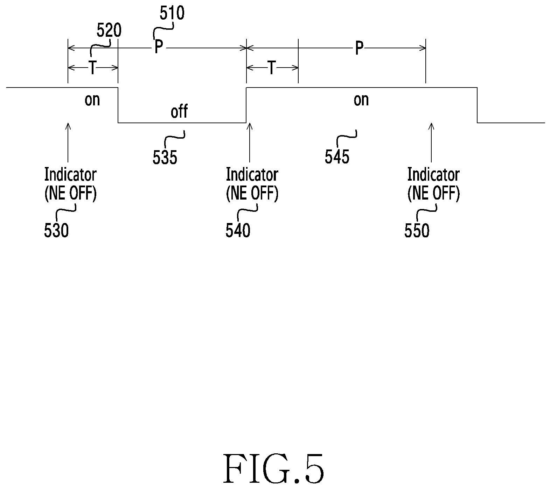

FIG. 5 illustrates an operation method of a NES mode according to an embodiment of the disclosure.

A UE in a NES mode defined for reduction of the power consumption of a base station may operate by periodically transitioning, for an NE state, between an NE OFF state and an NE ON state. The UE may not perform paging monitoring configured by a PF/PO in the NE OFF state. The UE may deactivate a PRACH resource in the NE OFF state not to transmit a random access preamble. An embodiment of FIG. 5 may correspond to one of operations of a deactivated DRX cycle described with reference to FIG. 2, FIG. 3, and FIG. 4.

Referring to FIG. 5, a UE may periodically identify (or monitor) an indicator 530, 540, or 550 of a base station in an NE ON state to determine whether to transition to an NE OFF state. In the embodiment of FIG. 5, it is assumed that a period during which the UE transitions to the NE ON state to identify an indicator of the base station is P 510, and a time during which the UE identifies an indicator of the base station after transitioning to the NE ON state is T 520. The values of P 510 and T 520 may be configured by being transferred from the base station to the UE through at least one of a system information block, an RRC message, a MAC CE, or downlink control information (DCI). According to an embodiment, the values of P 510 and T 520 may be previously configured values. The base station may indicate, through the indicator 530, 540, or 550, the UE whether the UE is to transition to the NE OFF state or remain in the NE ON state after passage of a time of T 520 when the UE transition to the NE ON state during the time of T 520. The UE having received an indication from the indicator 530, 540, or 550 of the base station may determine the NE state.

According to an embodiment, the UE is assumed to receive, from the indicator 530 at a time point in T 520, an indication to transition from the NE ON state to the NE OFF state. Thereafter, the UE may transition to the NE OFF state when a T time is ended (as indicated by reference numeral 535). However, according to an embodiment, the UE may transition to the NE OFF state immediately (or after passage of a predetermined time) when an indication to transition to the NE OFF state is received through the indicator of the base station. In addition, according to an embodiment, the indicator 530 indicating the UE to transition the NE state of the UE to the NE OFF state may be omitted, and the UE may transition to the NE OFF state even when the indicator 530 indicating to transition to the NE OFF state is not received. Thereafter, the UE may transition to the NE ON state at a starting time point of a next period P and identify an indicator of the base station during the T time.

According to an embodiment, the UE transitioning to the NE ON state at the starting time point of the period P and remaining in the state for the T time is assumed to receive the indicator 540 indicating to maintain the NE ON state. Then, the UE maintains the NE ON state for a time of the period P (as indicated by reference numeral 545) and may not transition to the NE OFF state. According to an embodiment, the indicator 540 indicating to maintain the NE ON state may be omitted, and the UE may maintain the NE ON state even when the indicator 540 indicating to maintain the NE ON state is not received. Thereafter, the UE may identify an indicator of the base station in NE ON during the T time from the starting time point of the period P.

According to an embodiment, the UE is assumed to receive the indicator 550 indicating to transition from the NE ON state to the NE OFF state. Thereafter, the UE may transition to the NE OFF state when the T time is ended (as indicated by reference numeral 555). However, according to an embodiment, the UE may transition to the NE OFF state immediately (or after passage of a predetermined time) when the UE is indicated by the base station to transition from the NE ON state to the NE OFF state.

The period P defined in the embodiment of FIG. 5 may be configured to be an integer multiple of a DRX cycle, such as a NES cycle defined in FIG. 2, FIG. 3, and FIG. 4. At this time, the UE may monitor an indicator in the NE ON state at a starting time point of a NES cycle. The UE may determine whether to monitor a paging resource (PF/PO or PEI) for the NES cycle P, according to an operation indicated by the indicator. In an embodiment, when an indicator indicates the UE to transition to the NE OFF state, a PRACH resource is deactivated so that transmission of a random access preamble using the PRACH resource may not be performed in the NE OFF state.

The indicator 530, 540, or 550 indicating the NE state of the UE may be transmitted by downlink control information (DCI) transmitted through a physical downlink control channel (PDCCH). To this end, a search space in which the UE monitors the indicator 530, 540, or 550 may be configured. Then, a radio network temporary RNTI (RNTI) for receiving the indicator 530, 540, or 550 is configured, and a PDCCH may be monitored using the RNTI. If the base station supports beamforming, a T value or a starting time point of the T time for each SSB may be configured.

According to an embodiment, the indicator 530, 540, or 550 indicating the NE state of the UE may be a form of a short message. The short message may be transmitted using a message sequence or transmitted using coding. In another embodiment, the indicator 530, 540, or 550 indicating the NE state of the UE may be transmitted using a paging(P)-RNTI for paging. However, a data part or a DCI field of transmission using a P-RNTI may include the indicator indicating the NE state of the UE. In another embodiment, the indicator 530, 540, or 550 indicating the NE state of the UE may be transmitted by a system information block message.

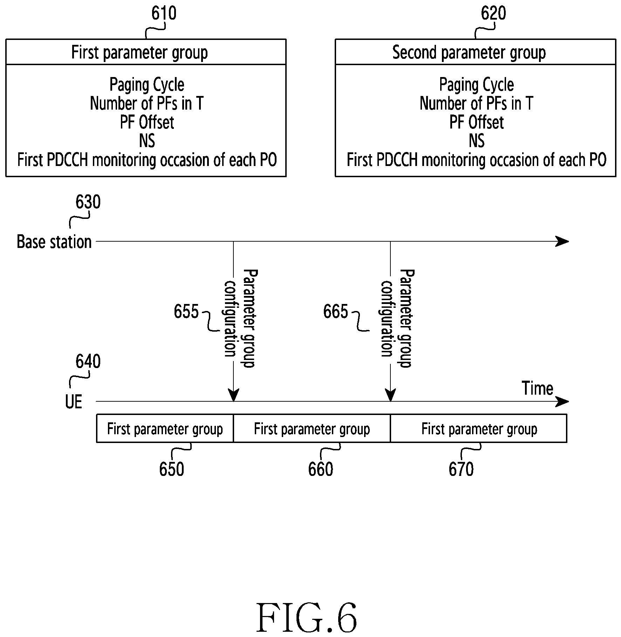

FIG. 6 illustrates a method of configuring a NES mode parameter group according to an embodiment of the disclosure.

A base station may configure a separate paging parameter group to reduce the power consumption of the base station. Then, the base station may configure a parameter group by selecting paging parameters according to the amount of paging that the base station needs to process, and the density of UEs in the coverage.

Referring to FIG. 6, two parameter groups including a first parameter group 610 and a second parameter group 620 being configured by a base station 630 is illustrated, but the number of parameter groups may be larger. Each parameter group may include a paging cycle (DRX cycle), the number of paging frames (PFs) in a T time for paging, a PF offset indicating a PF position, an Ns constant value, and a first PDCCH monitoring occasion in each PO. The base station 630 may configure each parameter group to have a different parameter value. One parameter group among them is a parameter group used regardless of a NES mode and may be a parameter group basically used by a UE 640 not supporting the NES mode.

According to an embodiment, a message for parameter group configuration 655 or 665 indicating which parameter group is to be used may be transmitted by the base station 630 to the UE 640 by using downlink control information (DCI) transmitted through a physical downlink control channel (PDCCH). To this end, a search space in which the UE 640 monitors the message for the parameter group configuration 655 or 665 may be configured. Then, a radio network temporary RNTI (RNTI) for receiving the message for the parameter group configuration 655 or 665 is configured, and the UE may monitor a PDCCH by using the RNTI.

According to an embodiment, the message for the parameter group configuration 655 or 665 transmitted by the base station 630 to the UE 640 may be a form of a short message. The short message may be transmitted using a message sequence or be a message using coding. According to another embodiment, the message for the parameter group configuration 655 or 665 may be transmitted using a paging(P)-RNTI for paging. However, a data part or a DCI field of transmission using a P-RNTI may include an indicator indicating the parameter group configuration. According to another embodiment, the message for the parameter group configuration 655 or 665 may be transmitted by a system information block message.

According to an embodiment of FIG. 6, the base station 630 may transmit a message for second parameter group configuration 655 to the UE 640 having been applying a first parameter group 650, to indicate the UE to apply a second parameter group 660. The UE 640 having received the message for the second parameter configuration 655 may stop applying the first parameter group 650 and apply the second parameter group 660. Thereafter, the base station 630 may transmit a message for first parameter configuration 665 to the UE 640 to indicate the UE to apply a first parameter group 670. The UE 640 having received the message for the first parameter configuration 665 may stop applying the second parameter group 660 and apply the first parameter group 670.

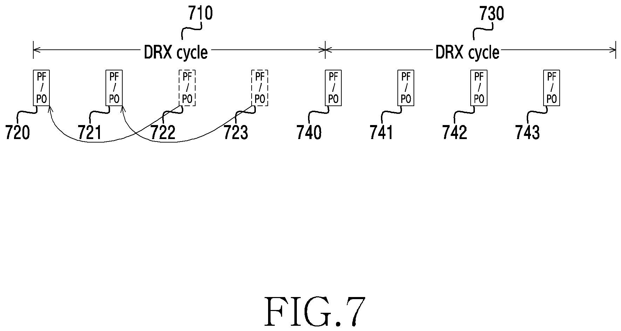

FIG. 7 illustrates a method of configuring an I-DRX PF/PO according to an embodiment of the disclosure.

A base station may configure an I-DRX mode to periodically transmit a paging message to a UE in an idle mode or an inactive mode. In the I-DRX mode, the UE being in the idle mode or the inactive mode and in the coverage of the base station may have a paging frame in which reception of a paging message is possible, and monitor a paging message in a paging occasion (PO) in the paging frame (PF). In general, there are multiple UEs in a single base station coverage, and when multiple UEs existing in the single base station coverage simultaneously receive a paging message, the paging message size may be excessively increased, and thus PFs of a UE may be evenly distributed in a DRX cycle. If the base station temporarily cuts of the power of a transceiver to reduce power consumption, it may be required to change, into some PFs, the PFs of the UE evenly distributed in a DRX cycle.

FIG. 7 illustrates a situation where four PFs are configured in a DRX cycle and one or more POs are configured in each PF. However, if the base station temporarily cuts of the power of a transceiver to reduce power consumption, some PFs among configured PFs may not be used.

According to an embodiment, the UE may use activated PFs 720 and 721 among four PFs 720, 721, 722, and 723 configured in a first DRX cycle 710 and then may not use deactivated PFs 722 and 723. To this end, by introducing an integer R value into an equation for determining a PF of the UE, a PF used by the UE when the base station reduces power consumption (this may be called a NES mode) may be changed. More specifically, an equation for determining the position of a PF by the UE may be as follows.

$$(SFN + PF\_offset) \bmod T = (T \operatorname{div} N)*(UE\_ID \bmod (N/R))$$

When the current SFN satisfies the equation, this frame may be determined as a PF. Here, T denotes the length of the DRX cycle, N indicates the total number of PFs in the DRX cycle, PF_offset is a PF offset, and UE_ID is an identifier of the UE and may be a remainder obtained by dividing 5G-S-TMSI by 1024. The values of (5G-S-TMSI mod 1024) PF_offset, T, N, R, etc. may be transferred by the base station to the UE through a system information block message. If the base station does not reduce power consumption in the DRX cycle, R may be configured to be the value of 1. The base station may configure whether to apply, as an R value, 1 or a configured R value in the current DRX cycle for the UE through a system information block or a DCI message.

In an embodiment of FIG. 7, it is assumed that N is configured to be 4 and R is configured to be 2. As a PF of all UEs, the first PF 720 or the second PF 721 in the DRX cycle may be used. In particular, a UE using the third PF 722 when an R value is equal to 1 may use the first PF 720 when R is equal to 2, and a UE using the fourth PF 723 when an R value is equal to 1 may use the second PF 721 when R is equal to 2. Therefore, the base station does not need to transmit a paging message in the third PF 722 and the fourth PF 723 and thus it is possible to reduce power consumption. On the contrary, according to an embodiment, an R value is not applied in a second DRX cycle 730 (R=1), and thus the base station may use all configured PFs 740, 741, 742, and 743.

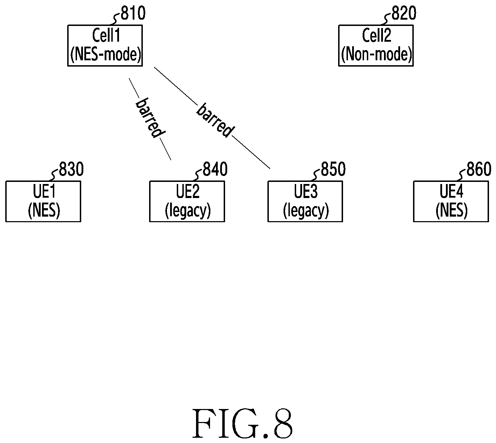

FIG. 8 illustrates a cell access method according to an embodiment of the disclosure.

A base station is required to temporarily cut off the power of some transceivers to reduce power consumption. However, if a UE does not know the power cutoff by the base station, the UE may malfunction or perform an unnecessary operation so that communication efficiency may be lowered. Therefore, the base station may require a method of restricting an operation of a UE, that is, an initial access (cell reselection) of the UE not supporting a NES mode, according to the reduction of power consumption of the base station. One method by which a base station restricts an initial access of a UE in a wireless communication system is access barring, and if the base station is unable to receive an initial access of the UE, the base station may configure an access barring bit for the UE. The UE for which the access barring bit is configured may fail to perform an initial access to the base station or may perform an initial access at a low probability.

Referring to FIG. 8, a first base station 810 supporting a NES mode (or executing the NES mode) may restrict an initial access of UEs 840 and 850 not supporting the NES mode (refer primarily to previous versions of UEs (legacy UEs)) by configuring access barring to restrict access of the UEs 840 and 850 not supporting the NES mode. However, the base station is required to allow an initial access of UEs 830 and 860 supporting the NES mode and thus may configure a separate access barring bit for the UEs 830 and 860 supporting the NES mode. When the UEs 830 and 860 supporting the NES mode identifies that the base station has configured a separate access barring bit for the UEs 830 and 860 supporting the NES mode, the UEs 830 and 860 may disregard an existing access barring bit for the UEs 840 and 850 not supporting the NES mode. Then, the UEs 830 and 860 supporting the NES mode may identify the access barring bit for the UEs 830 and 860 supporting the NES mode to perform an initial access (or cell reselection). According to an embodiment, the access barring bit of the UEs 830 and 860 supporting the NES mode may be called NES barring. This access barring bit may be configured by a master information block (MIB) or a system information block (SIB). According to an embodiment, if a NES barring field is not configured, the UEs 830 and 860 supporting the NES mode may also determine whether to perform an initial access (or cell reselection) to the base station, by using existing cell barring information. If a UE is barred by the first base station 810 supporting the NES mode, the UE may perform an initial access (or cell reselection) to another second base station 820 that does not bar the UE.

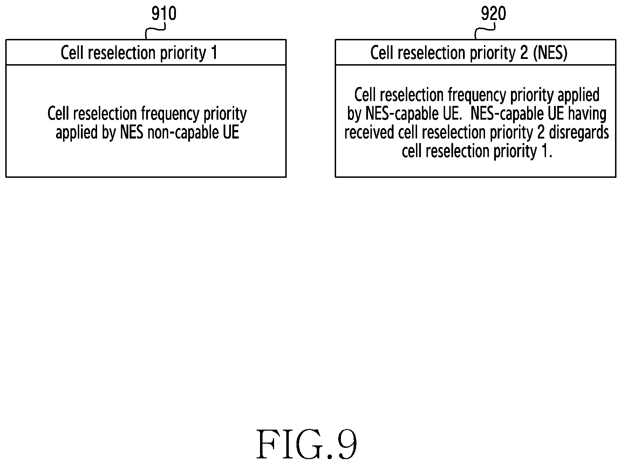

FIG. 9 illustrates a method of configuring a cell reselection priority according to an embodiment of the disclosure.

A base station is required to temporarily cut off the power of some transceivers to reduce power consumption. However, if a UE does not know the power cutoff by the base station, the UE may malfunction or perform an unnecessary operation so that communication efficiency may be lowered. Therefore, the base station may require a method of restricting an operation of a UE, that is, an initial access (cell reselection) of the UE not supporting a NES mode, according to the reduction of power consumption of the base station.

FIG. 9 illustrates a method by which a UE supporting a NES mode and a UE not supporting the NES mode have different cell reselection priorities. A base station (e.g., the first base station 810 in FIG. 8) supporting an NES mode (or executing the NES mode) may transmit two types of cell reselection priorities 910 and 920 to a UE through a master information block or a system information block. The first cell reselection priority 910 may be a cell reselection priority used by a UE not supporting the NES mode. A UE not supporting the NES mode may determine whether to reselect a corresponding cell at the time of cell reselection, based on the first cell reselection priority 910. According to an embodiment, a base station (e.g., the second base station 820 in FIG. 8) not supporting the NES mode may notify a UE of only the first cell reselection priority 910, and a UE supporting the NES mode may also determine cell reselection according to the first cell reselection priority 910. The second cell reselection priority 920 may be a cell reselection priority configured by a base station supporting the NES mode for a UE supporting the NES mode. When a UE supporting the NES mode receives the second cell reselection priority 920, the UE may disregard the first cell reselection priority 910 and apply the second cell reselection priority.

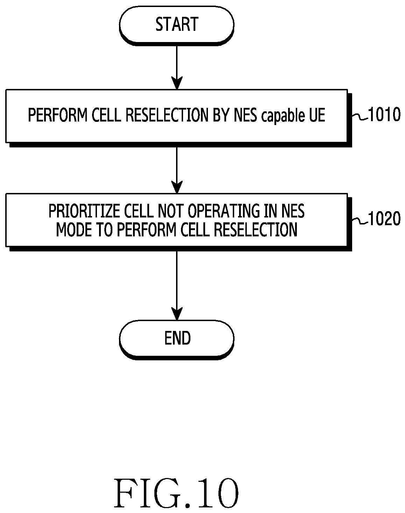

FIG. 10 illustrates a cell reselection method according to an embodiment of the disclosure.

A base station is required to temporarily cut off the power of some transceivers to reduce power consumption. However, if a UE does not know the power cutoff by the base station, the UE may malfunction or perform an unnecessary operation so that communication efficiency may be lowered. In addition, when many cells access to the base station reducing power consumption, the base station may not be able to perform reduction of power consumption any more. According to an embodiment, the base station may be required to terminate an NES mode. Therefore, a UE supporting the NES mode may need to prioritize a cell in which the base station does not operate in the NES mode, at the time of cell reselection.

Referring to FIG. 10, in operation 1010, a UE (NES capable UE) supporting an NES mode may perform cell reselection.

In operation 1020, the UE supporting the NES mode may prioritize a cell which does not operate in the NES mode among cells identifiable by the UE, to perform cell reselection. According to an embodiment, the UE supporting the NES mode may receive a cell reselection priority from a base station through a master information block or a system information block. The UE having received the priority may perform cell reselection by applying the cell reselection priority.

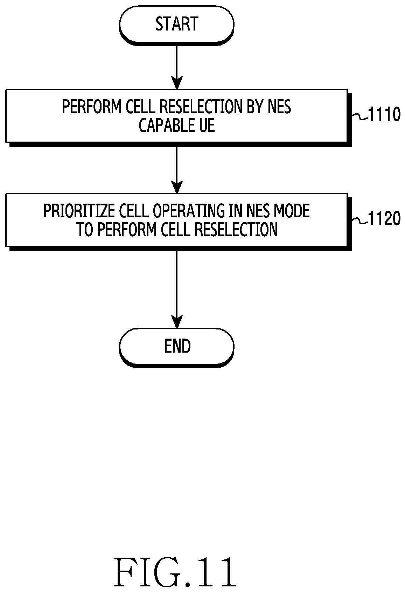

FIG. 11 illustrates a cell reselection method according to an embodiment of the disclosure.

A base station is required to temporarily cut off the power of some transceivers to reduce power consumption. However, if a UE does not know the power cutoff by the base station, the UE may malfunction or perform an unnecessary operation so that communication efficiency may be lowered. According to an embodiment, the termination of an NES mode may be required. Therefore, at the time of cell reselection, a UE may be required to induce the UE supporting the NES mode to access a base station supporting the NES mode.

Referring to FIG. 11, in operation 1110, a UE (NES capable UE) supporting an NES mode may be required to perform cell reselection.

In operation 1120, the UE may prioritize a cell which operates in the NES mode among cells identifiable by the UE, to perform cell reselection.

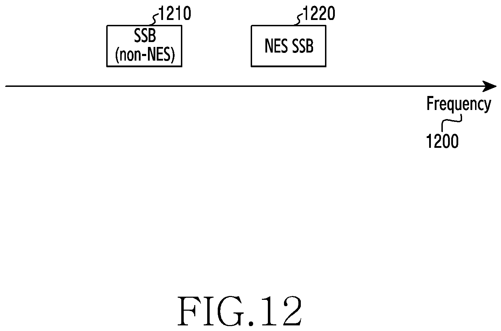

FIG. 12 illustrates a method of configuring a NES SSB according to an embodiment of the disclosure.

A base station in a NES mode cuts off the power of some transceivers and thus the base station may not necessarily operate all the same SSBs as when the base station does not operate in the NES mode. Therefore, a base station operating in the NES mode may have a separate SSB. Referring to FIG. 12, an SSB (non-NES SSB) 1210 used by a base station when the base station is not operating in a NES mode and an SSB (NES SSB) 1220 used when the base station is operating in the NES mode may be separately configured. A UE may, when the base station does not operate in the NES mode, measure a signal of the non-NES SSB 1210 to perform synchronization and signal measurement with the base station, and when the base station operates in the NES mode, may measure a signal of the NES SSB 1220 to perform synchronization and signal measurement with the base station. In an embodiment of FIG. 12, it has been assumed that the non-NES SSB 1210 and the NES SSB 1220 do not overlap on a frequency axis 1200, but it is also possible to configure the non-NES SSB 1210 and the NES SSB 1220 to overlap on the frequency axis 1200.

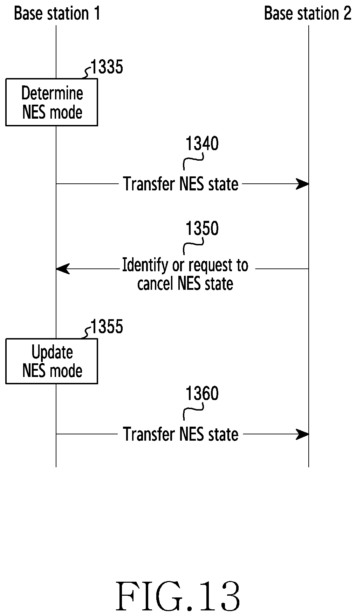

FIG. 13 illustrates a method of configuring a NES mode between base stations according to an embodiment of the disclosure.

A base station may configure an NES mode according to a situation of a UE connected to the base station so as to reduce the power consumption of the base station. However, configuring an NES mode by one base station may require another base station to process more UEs or maintain a higher transmission speed. Therefore, the operation of a base station in the NES mode may cause the overload of a neighboring base station, and thus the base station may need to negotiate with the neighboring base station regarding NES mode configuration information.

Referring to FIG. 13, after a first base station 1310 determines to configure a NES mode (operation 1335), the first base station may transfer, to a second base station 1320 that is a neighboring base station, a state (detailed configuration information or the fact that the NES mode is to be configured) of the NES mode to be configured (operation 1340). The second base station 1320 having received a message relating to the state of the NES mode may determine whether the NES mode of the first base station 1310 causes a problem in providing of a communication service of the second base station 1320.

If the second base station 1320 determines that the NES mode of the first base station 1310 does not cause a problem in providing of the communication service, the second base station 1320 may transmit, to the first base station 1310, a message including information indicating that there is no problem for the NES state of the first base station 1310. If the second base station 1320 determines that there is a possibility that the NES mode of the first base station 1310 may cause a problem in providing of the communication service of the second base station 1320, the second base station 1320 may transmit a NES state cancel request that requests the first base station 1310 not to apply the NES mode. That is, the second base station 1320 may transfer feedback information 1350 to the first base station 1310. The first base station 1310 may receive the feedback information 1350 on a NES state configuration of the first base station 1310 from the second base station 1320 and then update the NES mode, based on the same information (operation 1355). The first base station 1310 may transmit information on the updated NES mode to a UE through a system information block. Thereafter, the first base station may transfer the updated NES mode state of the first base station 1310 to the second base station 1320 that is a neighboring base station (operation 1360).

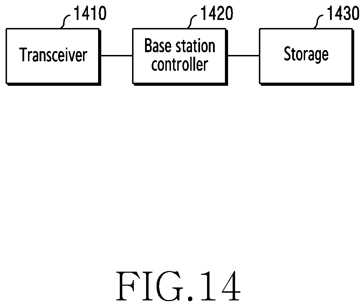

FIG. 14 illustrates a structure of a base station according to an embodiment of the disclosure.

Referring to FIG. 14, the base station may include a transceiver 1410, a controller 1420, and a storage 1430. The transceiver 1510, the controller 1520, and the storage 1530 may be operated according to the above-described communication methods of the base station. In addition, network devices may correspond to the structure of the base station. However, components of the base station are not limited to the above-described example. For example, the base station may include a larger or smaller number of components than the above-described components. Furthermore, the transceiver 1510, the controller 1520, and the storage 1530 may be implemented in the form of a single chip.

The transceiver 1510 refers to a base station receiver and a base station transmitter as a whole, and may transmit/receive signals with the UE, other base stations, and other network devices. The transmitted/received signals may include control information and data. The transceiver 1510 may transmit, for example, system information, synchronization signals, or reference signals to the UE. To this end, the transceiver 1510 may include an RF transmitter configured to up-convert and amplify the frequency of transmitted signals, an RF receiver configured to low-noise-amplify received signals and down-convert the frequency thereof, and the like. However, this is only an embodiment of the transceiver 1510, and the components of the transceiver 1510 are not limited to the RF transmitter and the RF receiver. The transceiver 1510 may include wired/wireless transceivers, and may include various components for transmitting/receiving signals. In addition, the transceiver 1510 may receive signals through a communication channel (e.g., a radio channel), output the same to the controller 1520, and transmit signals output from the controller 1520 through the communication channel. Furthermore, the transceiver 1510 may receive communication signals, output same to a processor, and transmit signals output from the processor to the UE, other base stations, or other network entities through a wired/wireless network.

The storage 1530 may store programs and data necessary for operations of the base station. In addition, the storage 1530 may store control information or data included in signals acquired by the base station. The memory 1530 may include storage media such as a ROM, a RAM, a hard disk, a CD-ROM, and a DVD, or a combination of storage media. In addition, the storage 1530 may store at least one of information transmitted/received through the transceiver 1510 and information generated through the controller 1520.

As used herein, the controller 1420 may be defined as a circuit, an application specific integrated circuit, or at least one processor. The processor may include a communication processor (CP) which performs control for communication and an application processor (AP) which controls upper layers such as application programs. The controller 1420 may control the overall operation of the base station according to the embodiments proposed in the disclosure. For example, the controller 1420 may control signal flows between the respective blocks to perform operations according to the above-described flowcharts.

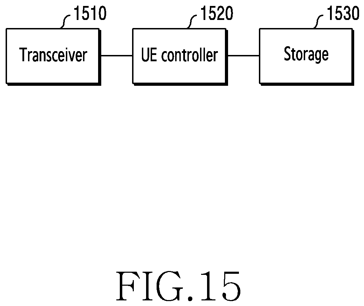

FIG. 15 illustrates a structure of a UE according to an embodiment of the disclosure.

Referring to FIG. 15, the UE may include a transceiver 1510, a controller 1520, and a storage 1530. The transceiver 1610, the controller 1620, and the storage 1630 may be operated according to the above-described communication methods of the UE. However, components of the UE are not limited to the above-described example.

For example, the UE may include a larger or smaller number of components than the above-described components. Furthermore, the transceiver 1610, the controller 1620, and the storage 1630 may be implemented in the form of a single chip.

The transceiver 1610 refers to a UE receiver and a UE transmitter as a whole, and may transmit/receive signals with the base station, other UEs, and other network entities. The signals transmitted/received with the base station may include control information and data. The transceiver 1610 may receive, for example, system information, synchronization signals, or reference signals from the base station. To this end, the transceiver 1610 may include an RF transmitter configured to up-convert and amplify the frequency of transmitted signals, an RF receiver configured to low-noise-amplify received signals and down-convert the frequency thereof, and the like. However, this is only an embodiment of the transceiver 1610, and the components of the transceiver 1610 are not limited to the RF transmitter and the RF receiver. Also, the transceiver 1610 may include wired/wireless transceivers, and may include various components for transmitting/receiving signals. In addition, the transceiver 1610 may receive signals through a radio channel, output the same to the controller 1620, and transmit signals output from the controller 1620 through the radio channel. Furthermore, the transceiver 1610 may receive communication signals, output same to a processor, and transmit signals output from the processor to a network entity through a wired/wireless network.

The storage 1630 may store programs and data necessary for operations of the UE. In addition, the storage 1630 may store control information or data included in signals acquired by the UE. The memory 1630 may include storage media such as a ROM, a RAM, a hard disk, a CD-ROM, and a DVD, or a combination of storage media.

As used herein, the controller may be defined as a circuit, an application specific integrated circuit, or at least one processor. The processor may include a communication processor (CP) which performs control for communication and an application processor (AP) which controls upper layers such as application programs. The controller 1520 may control the overall operation of the UE according to the embodiments proposed in the disclosure. For example, the controller 1520 may control signal flows between the respective blocks to perform operations according to the above-described flowcharts.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a base station in a wireless communication system, the method comprising:

   transmitting one of a first type master information block (MIB) bit indicating whether all types of user equipments are allowed to access a cell, and a second type MIB including the first access barring bit andbit indicating whether a user equipment supporting an energy saving mode a base station is allowed to access a cell; and
   performing a cell access procedure with at least one user equipment having received one of the first type MIB and the second type MIB,

wherein the first access barring bit in the second MIB is not used in a user equipment supporting the energy saving mode of the base station.

2.  The method of claim 1, wherein the first access barring bit is used to bar access of a user equipment not supporting the energy saving mode of the base station.

3.  The method of claim 1, wherein the user equipment supporting the energy saving mode of the base station corresponds to a user equipment that knows a state of the base station having no or little data to transmit and receive to and from the user equipment.

4.  The method of claim 1, wherein, in case that the second access barring bit is identified by a user equipment supporting the energy saving mode of the base station, the first access barring bit is disregarded by the user equipment supporting the energy saving mode of the base station.

5.  A base station in a wireless communication system, the base station comprising:

    at least one transceiver; and
    a controller coupled to the at least one transceiver,
    wherein the controller is configured to:

    transmit one of a first type master information block (MIB) including a first access barring bit indicating whether all types of user equipments are allowed to access a cell, and a second type MIB including the first access barring bit and a second access barring bit indicating whether a user equipment supporting an energy saving mode of the base station is allowed to access a cell; and
    perform a cell access procedure with at least one user equipment having received one of the first type MIB and the second type MIB, and
    the first access barring bit in the second MIB is not used in a user equipment supporting the energy saving mode of the base station.

6.  The base station of claim 5, wherein the first access barring bit is used to bar access of a user equipment not supporting the energy saving mode of the base station.

7.  The base station of claim 5, wherein the user equipment supporting the energy saving mode of the base station corresponds to a user equipment that knows a state of the base station having no or little data to transmit and receive to and from the user equipment.

8.  The base station of claim 5, wherein, in case that the second access barring bit is identified by a user equipment supporting the energy saving mode of the base station, the first access barring bit is disregarded by the user equipment supporting the energy saving mode of the base station.

9.  A method performed by a user equipment in a wireless communication system, the method comprising:

    decoding a master information block (MIB) received from a base station;
    identifying at least one of a first access barring bit and a second access barring bit included in the MIB, the first access barring bit indicating whether all types of user equipments are allowed to access a cell, and the second access barring bit indicating whether a user equipment supporting an energy saving mode of the base station is allowed to access a cell; and
    in case that the user equipment supports the energy saving mode of the base station and identifies the second access barring bit in the MIB, determining whether to perform an access procedure with the base station, based on the second access barring bit.

10. The method of claim 9, wherein the second access barring bit is used to allow access of a user equipment supporting the energy saving mode of the base station, and wherein the first access barring bit is used to bar access of a user equipment not supporting the energy saving mode of the base station.

11. The method of claim 9, wherein the user equipment supporting the energy saving mode of the base station corresponds to a user equipment that knows a state of the base station having no or little data to transmit and receive to and from the user equipment.

12. The method of claim 9, further comprising, in case that the second access barring bit is not identified, determining whether to access the base station, by using the first access barring bit.

13. A user equipment in a wireless communication system, the user equipment comprising:

at least one transceiver; and
a controller coupled to the at least one transceiver,
wherein the controller is configured to:

decode a master information block (MIB) received from a base station;
identify at least one of a first access barring bit and a second access barring bit included in the MIB, the first access barring bit indicating whether all types of user equipments are allowed to access a cell, and the second access barring bit indicating whether a user equipment supporting an energy saving mode of the base station is allowed to access a cell; and
in case that the user equipment supports the energy saving mode of the base station and identifies the second access barring bit in the MIB, determine whether to perform an access procedure with the base station, based on the second access barring bit.

14. The user equipment of claim 13, wherein the second access barring bit is used to allow access of a user equipment supporting the energy saving mode of the base station,

wherein the first access barring bit is used to bar access of a user equipment not supporting the energy saving mode of the base station, and
wherein the user equipment supporting the energy saving mode of the base station corresponds to a user equipment that knows a state of the base station having no or little data to transmit and receive to and from the user equipment.

15. The user equipment of claim 13, wherein the controller is configured to, in case that the second access barring bit is not identified, determine whether to access the base station, by using the first access barring bit.

FIG.1

FIG.2

START

310
NES I-DRX IS CONFIGURED

320
IS DRX cycle IN
DEACTIVATED STATE?

YES

NO

330
PAGING RESOURCE (PF/PO) AND
PRACH RESOURCE ARE DEACTIVATED

340
PAGING RESOURCE (PF/PO) AND
PRACH RESOURCE ARE ACTIVATED

END

FIG.3

START

410

NES I-DRX IS CONFIGURED

420

IS DRX cycle IN
DEACTIVATED STATE?

YES                              NO

430

PAGING RESOURCE (PF/PO)
IS DEACTIVATED

440

PAGING RESOURCE (PF/PO)
IS ACTIVATED

END

FIG.4

FIG.5

FIG.6

FIG.7

810
Cell1
(NES-mode)

820
Cell2
(Non-mode)

barred

barred

830
UE1
(NES)

840
UE2
(legacy)

850
UE3
(legacy)

860
UE4
(NES)

FIG.8

910

| Cell reselection priority 1 |
|---|
| Cell reselection frequency priority applied by NES non-capable UE |

920

| Cell reselection priority 2 (NES) |
|---|
| Cell reselection frequency priority applied by NES-capable UE. NES-capable UE having received cell reselection priority 2 disregards cell reselection priority 1. |

FIG.9

START

PERFORM CELL RESELECTION BY NES capable UE ~1010

PRIORITIZE CELL NOT OPERATING IN NES
MODE TO PERFORM CELL RESELECTION ~1020

END

# FIG.10

START

PERFORM CELL RESELECTION BY NES CAPABLE UE ~1110

PRIORITIZE CELL OPERATING IN NES MODE TO PERFORM CELL RESELECTION ~1120

END

FIG.11

1210

SSB
(non-NES)

1220

NES SSB

Frequency

1200

# FIG.12

Base station 1                          Base station 2

1335

```
┌──────────┐
│ Determine│
│ NES mode │
└──────────┘
```

1340

Transfer NES state →

1350

← Identify or request to
cancel NES state

1355

```
┌──────────┐
│  Update  │
│ NES mode │
└──────────┘
```

1360

Transfer NES state →

FIG.13

1410     1420     1430

| Transceiver | Base station controller | Storage |

# FIG.14

1510      1520      1530

| Transceiver | UE controller | Storage |

# FIG.15

**INTERNATIONAL SEARCH REPORT**

International application No.

**PCT/KR2023/007831**

| A. | CLASSIFICATION OF SUBJECT MATTER |
|---|---|

**H04W 52/02**(2009.01)i; **H04W 76/28**(2018.01)i; **H04W 68/02**(2009.01)i

According to International Patent Classification (IPC) or to both national classification and IPC

| B. | FIELDS SEARCHED |
|---|---|

Minimum documentation searched (classification system followed by classification symbols)

H04W 52/02(2009.01); H04W 48/02(2009.01); H04W 48/10(2009.01); H04W 48/16(2009.01); H04W 76/18(2018.01); H04W 76/27(2018.01); H04W 76/30(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 접속(cell access), 액세스 바링 비트(access barring bit), MIB, 에너지 절약 모드(energy saving mode)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 3GPP; TSG RAN; NR; RRC protocol specification (Release 17). 3GPP TS 38.331 V17.0.0. 19 April 2022. See page 47. | 1-15 |
| A | US 2018-0220363 A1 (TELEFONAKTIEBOLAGET LM ERICSSON (PUBL)) 02 August 2018 (2018-08-02) See paragraphs [0075]-[0119]; claim 35; and figures 2A-2B. | 1-15 |
| A | US 2020-0314943 A1 (LG ELECTRONICS INC.) 01 October 2020 (2020-10-01) See paragraphs [0149]-[0164]; and figure 7. | 1-15 |
| A | KR 10-2021-0048549 A (DATANG MOBILE COMMUNICATIONS EQUIPMENT CO., LTD.) 03 May 2021 (2021-05-03) See paragraphs [0054]-[0104]; and figures 5-7. | 1-15 |
| A | WO 2022-028436 A1 (ESSEN INNOVATION COMPANY LIMITED) 10 February 2022 (2022-02-10) See paragraphs [0049]-[0055]; and figure 5. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 August 2023** | **29 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
| --- |
| **PCT/KR2023/007831** |

| Patent document cited in search report | | | Publication date (day/month/year) | Patent family member(s) | | | Publication date (day/month/year) |
| --- | --- | --- | --- | --- | --- | --- | --- |
| US | 2018-0220363 | A1 | 02 August 2018 | AR | 107094 | A1 | 21 March 2018 |
| | | | | CN | 108370534 | A | 03 August 2018 |
| | | | | EP | 3391687 | A1 | 24 October 2018 |
| | | | | MX | 2018006511 | A | 15 August 2018 |
| | | | | WO | 2017-105317 | A1 | 22 June 2017 |
| US | 2020-0314943 | A1 | 01 October 2020 | US | 11044776 | B2 | 22 June 2021 |
| | | | | WO | 2017-171183 | A1 | 05 October 2017 |
| KR | 10-2021-0048549 | A | 03 May 2021 | CN | 110876175 | A | 10 March 2020 |
| | | | | CN | 110876175 | B | 16 July 2021 |
| | | | | EP | 3846546 | A1 | 07 July 2021 |
| | | | | US | 2021-0204348 | A1 | 01 July 2021 |
| | | | | WO | 2020-042945 | A1 | 05 March 2020 |
| WO | 2022-028436 | A1 | 10 February 2022 | CN | 116261876 | A | 13 June 2023 |
| | | | | TW | 202211709 | A | 16 March 2022 |
| | | | | TW | 202214030 | A | 01 April 2022 |
| | | | | US | 2022-0377798 | A1 | 24 November 2022 |
| | | | | US | 2022-0418001 | A1 | 29 December 2022 |
| | | | | WO | 2022-028432 | A1 | 10 February 2022 |

Form PCT/ISA/210 (patent family annex) (July 2022)